# EUROPEAN PATENT SPECIFICATION

(11) **EP 3 830 626 B1**
(45) Date of publication and mention of the grant of the patent: **01.05.2024**
(21) Application number: 18762627.0
(22) Date of filing: 01.08.2018
(51) Int. Cl.: G02B 21/34, G01N 1/28, G01N 1/36, G01N 1/30

(54) **METHOD FOR THE PREPARATION OF BIOLOGICAL, CYTOLOGICAL, HISTOLOGICAL AND AUTOPSICAL SAMPLES AND COMPOSITION FOR MOUNTING MICROSCOPE SLIDES**
VERFAHREN ZUR HERSTELLUNG VON BIOLOGISCHEN, ZYTOLOGISCHEN, HISTOLOGISCHEN UND AUTOPSISCHEN PROBEN UND ZUSAMMENSETZUNG ZUR MONTAGE VON MIKROSKOPOBJEKTTRÄGERN
PROCÉDÉ DE PRÉPARATION D'ÉCHANTILLONS BIOLOGIQUES, CYTOLOGIQUES, HISTOLOGIQUES ET AUTOPSIQUES ET COMPOSITION POUR LE MONTAGE DE LAMES DE MICROSCOPE

(43) Date of publication of application: 09.06.2021
(73) Proprietor: Diapath S.p.A., 24057 Martinengo (BG) (IT)
(72) Inventor: LUPO, Carmelo, 24057 Martinengo BG (IT); MELONE, Federica, 24057 Martinengo BG (IT); BATTISTEL, Alberto, 24057 Martinengo BG (IT)
(74) Representative: Trupiano, Federica
(86) International application number: PCT/IB2018/055780
(87) International publication number: WO 2020/026002

(56) References cited:
- WO-A1-2016/206672
- WO-A2-2012/176065

## Description

### SUMMARY OF THE INVENTION

Subject-matter of the present invention is a method for the preparation of biological, cytological, histological and autopsical samples and a composition for mounting microscope slides. Subject-matter of the invention is also the samples mounted with the compositions described herein.

### BACKGROUND OF THE INVENTION

In the histo-cytopathological diagnosis, the microscopic observation of biological samples is for the formulation of the diagnosis.

The preparation of biological samples, i.e. tissues and cells, is a multi-stage process which makes use of automatic technologies and/or manual protocols for making the sample itself suitable for the microscope observation.

As it is known in the art, the samples undergo several procedures which provide fixation, diaphanization and staining, before being "mounted" on a microscope slide for the microscope analysis.

The "mounting" consist of covering the sample which is on the microscope slide with a coverslip, usually having thickness lower than one millimeter. The stable adhesion of the coverslip to the microscope slide is achieved by using a mounting medium having refractive index similar to that of the microscope slide.

The mounting media are viscous substances, usually soluble in organic solvents, which act as an adhesive and, once dried, assure a good conservation of the sample. Moreover, it is a fundamental requirement that all the materials used for the mounting are ultra-transparent, in order to allow the light coming from the light source to quantitatively reach the objective. The most common mounting medium is the Canada balsam (also commonly known as Canada turpentine).

The mounted microscope slide then undergoes the observation under the optical microscope, in order to formulate the diagnosis.

The mounting of the microscope slides is a kind of packaging of the histo-cytopathological sample and strongly affects its readability and time-resistance over time.

Object of the mounting is therefore to allow the sample to be analyzed to be within media with suitable refractive indexes, i.e. similar to those of the glass, in order to avoid possible distortions of the image during the microscope observation.

Another purpose of the mounting is to protect the sample and allow its conservation for long periods.

In the practical procedure of mounting the microscope slides, after the staining with water-soluble substances has been carried out (such as the typical hematoxylin and eosin stain), it is necessary to proceed with the sample dehydration by means of dippings into an increasing alcoholic scale of the microscope slide, with a last passage in xylene. Dehydration is necessary since the above mounting medium cannot be mixed with water or solutions thereof. After a proper dehydration an aliquot of the mounting medium is deposited on the microscope slide by means of a disposable pipette, watching any excess of the medium. Straight after, the thin coverslip is placed on the microscope slide.

This procedure can happen manually or automatically, by using automatic coverslippers.

A standard automatic coverslipper can sequentially apply the coverslips on the microscope slides bearing the sample section, by directly taking them from the basket used for the staining. At the end of the staining, the basket is placed in a tray of the automatic coverslipper, subsequently a clamp takes from the basket a microscope slide at a time and places it in horizontal position under the nozzle supplying the mounting medium.

After an aliquot of the mounting medium has been supplied, a suction cup places a coverslip on the microscope slide thus completing the preparation of the preparation. Some of these automatic coverslippers do not use coverslips, but rather a film released on the surface of the microscope slide after it has been properly soaked with xylene in order to allow proper adhesion.

The properly used mounting procedure of the sample briefly described above has however several drawbacks.

When a manual mounting procedure is employed, there will be the need of using the fume hood. As a matter of fact, it is used to limit the risk deriving from the use of toxic substances such as xylene, which is used for both the treatment of the sections and as diluent of the mounting medium.

Moreover there is the critical issue of the proper positioning of the coverslip on the microscope slide (both in case of manual and automatic mounting). It may happen that the coverslip slightly sticks out from the edges of the microscope slide, and in the cases of greater misalignment, the coverslip has to be remounted by the user. However, such operation becomes irreversible once the mounting medium becomes dry. If one would operate with the dried mounting medium, the mounted microscope slide should remain in the xylene in some cases for up to 3-4 days before being able to remove the misaligned coverslip, in order to then mount another one again. Moreover, microscopes have a metal clip hooked to the mobile tray, useful to keep the microscope slide fixed during the observation. During the positioning of the microscope slide under the lens, the metal clip vigorously hits the mounted microscope slide thus causing the break of small fragments from the edges of the microscope slide. The incorrect positioning of the coverslip on the microscope slide can significantly worsen the chipping of the microscope slide mounted on the microscope, since the created fragments accumulate on the microscope lamp (placed underneath the microscope slide) and in addition leave dangerous chipped edges of the mounted microscope slide. Moreover, the most frequent problem is the formation possibility of air bubbles between the coverslip and the sample. During the mounting procedure, the air bubbles form as a consequence of the user's manipulation, by the simple displacement of the container or by the collection of the mounting medium with the pipette (when an excess of the mounting medium has been deposited). All these operations cause the sliding of the coverslip on the microscope slide, causing small air bubbles to be included in the mounting medium. These remain trapped therein due to its high viscosity, thus causing problems to the proper microscope observation. The same problem can occur also with automatic mounting systems (coverslipper).

A further disadvantage refers to inaccurate and possible abundant delivery of the mounting medium. When this occurs, it will be needed to remove the excess mounting medium which leaks out from the mounted microscope slide, since it has strong adhesive power, thus clearly making difficult the manipulation by the user. The removal of the excess mounting medium is a delicate process, since possible smears of the fluid on the coverslip would compromise the microscope observation.

The "dismounting" of the preparation is another critical issue. As a matter of fact, in those cases where there is the need of recovering the biological sample from a microscope slide mounted since long time (with the aim of performing further tests), in order to be able to remove the coverslip, as mentioned, the mounted microscope slide must remain in a xylene bath for at least 3 days. As time passes, in fact, the mounting medium becomes less prone to be solubilized in xylene (*ad hoc* solvent for the solubilization and/or dilution of the most common mounting media). Moreover if the re-solubilization procedure of the mounting medium is not carried out properly, the removal of the coverslip causes the separation of the sample from the microscope slide or the removal of part of it, thus irremediably damaging the use of the sample itself for the further tests needed.

It is clear therefore that the mounting is highly time-consuming, being proportional to the number of microscope slides to be mounted and also due to the high accuracy requested for the application of the mounting medium and coverslip. The time requested for the complete drying of the mounted microscope slides should be added to this time. Therefore, in order to speed up the drying process, the mounted microscope slides are incubated within an oven at 60°C for about 30 minutes. Concerning the automatic procedure, there are other disadvantages with respect to the manual procedure. Among these, there is the fine calibration of the instrument. Since the mounting procedure requires significant precision, the instrument needs a millimeter calibration in order to avoid macroscopic preparation errors. For example, an inaccurate calibration of the mechanism moving the clamp can lead the microscope slide to breakage; analogously, the off-center positioning of the coverslip forces the user to dismount and mount again the preparation. Moreover, all the components of the apparatus to draw the mounting medium must be perfectly firm in order to avoid the formation of air bubbles.

There are automatic coverslippers as well which use a film instead of the coverslip; such coverslippers require accurate calibration, in order to assure that the film is uniformly spread out and does not cause artifacts on the microscope slide.

Moreover, since it is a high precision instrument, it must be placed on a dedicated vibration-isolated table and, possibly, also on an anti-vibration floor. Moreover, it is advantageous to place the instrument under the hood in a perfectly horizontal position, and the cleaning operations are usually carried out with xylene.

In addition, the cleaning procedures of the instrument are required daily. At the end of the use of the automatic coverslipper, the residues of the mounting medium must be removed from the dispenser units, the clasp and the conveyor belt, as well as from the nozzle delivering the mounting medium. Such cleaning procedures are carried out with a rag soaked with xylene, which is toxic for the user, in particular if the instrument is not placed under a fume hood. Great care should also be given in order to avoid the penetration of liquids within the instrument and the electric contacts. In addition, if some solvent should remain within the instrument, solvent vapors could come out. With the use of the apparatus without a fume hood, there is the risk of firing and poisoning.

Since the breakage of small microscope slide fragments is frequent, due to small imperfections on the calibration of the whole system, the removal of the above mentioned fragments from the conveyor belt, the basket collecting the microscope slides, the loading basket, the vacuum cup and the internal compartment of the instrument is necessary. In addition, several maintenance procedures of the used instruments are clearly needed.

Finally, the microscope slides for the immunohistochemistry analysis have often a bar code label on the frosted end, still before the biological sample is positioned. Such label, necessary for the identification, can be a source of malfunction of the clasp of the automatic coverslipper, since glue residues coming from the label tend to accumulate on the clasps, thus making a xylene cleaning necessary.

In view of the above, it is clear that there is the need of finding systems for mounting the microscope slides which can solve the several disadvantages related to the conventional mounting process of the biological samples. Mounting compositions and methods for mounting microscope slides are known from WO 2012/176065 A2, WO 2016/206672 A1, I. Elvers: "CELLULOSE ACETATE AS A MOUNTING MEDIUM FOR ACETIC SMEARS", LOVELAND ET AL: "MOUNTING MEDIA FOR MICROSCOPY" and Lupo Carmelo: "Liquid Coverslipper Technology".

### OBJECTS OF THE INVENTION

It is an object of the present invention to provide a quick and effective method for mounting microscope slides for the analysis of biological, cytological, histological and autopsical samples.

It is another object of the present invention to provide a new composition particularly suitable to the method of the invention for mounting microscope slides of the invention, for the analysis of cytological, histological and autopsical samples.

It is also an object of the present invention to provide a composition which allows a mounted microscope slide without bubbles and imperfections to be obtained and which, at the same time, provides further advantages, such as a suitable protection of the microscope slide itself.

It is also an object of the present invention to provide a composition which allows a mounted microscope slide which does not show yellowing over time and which is safe for human health.

It is a further object of the present invention to provide the use of said composition for the preparation of biological, cytological, histological and autopsical samples for their microscope observation.

Finally, it is an object of the present invention to provide biological samples mounted with the method and the composition of the invention.

### DESCRIPTION OF THE INVENTION

Subject-matter of the present invention, according to one of the aspects thereof, is method for mounting microscope slides for the analysis of biological, cytological, histological and autopsical samples, comprising:
(i) dipping said microscope slides into at least one fluid composition consisting of:
   a) at least one liquid component selected from ethyl acetate, butyl acetate, 1-methyl-2-methoxyethyl acetate; and
   b) one or more polymers selected from cellulose di-acetate, cellulose tri-acetate, cellulose propionate and cellulose acetate butyrate, in an amount of 5%-80% ([g of polymer (b)/100 ml of final composition]), preferably 10-30%.

In the method of the present invention, the dipping and the dripping require only few seconds/minutes, as it will be described in more detail in the present specification and examples.

The drying step (v) can be carried out with any suitable means known in the art, e.g. under a fume hood, in the oven, etc.

All the percentages expressed in the present invention, unless clearly stated, refer to the mass/volume percentage concentration ([g/100 ml]), i.e. to the weight of component (b) relative to 100 volume units of final composition. In practice, by way of example, according to the present invention a 20% composition indicates that in the composition there are 20 g of polymer (b)to which the liquid component (a) has been added in a suitable amount to reach a total volume of 100 ml.

According to the present invention, "dipping(s)" or "to dip" (or derived verb conjugations) denote that the microscope slide is introduced, generally vertically, into the fluid composition in order to cover it.

According to a preferred embodiment, the liquid component (a) is 1-methyl-2-methoxyethyl acetate.

According to a preferred embodiment, component (b) is cellulose acetate butyrate (CAB).

According to a preferred embodiment, the liquid component (a) is 1-methyl-2-methoxyethyl acetate and component (b) is cellulose acetate butyrate (CAB), advantageously, in a 10-30% amount (as above defined).

Subject-matter of the invention, according to another of the aspects thereof, is a composition for mounting a microscope slide for the analysis of biological, cytological, histological and autopsical samples, consisting of:
a') a liquid component selected from ethyl acetate, butyl acetate, 1-methyl-2-methoxyethyl acetate and mixtures thereof, preferably 1-methyl-2-methoxyethyl acetate; and
b') one or more polymers or copolymers selected from cellulose di-acetate, cellulose tri-acetate, cellulose propionate and cellulose acetate butyrate, in an amount of 5%-80% ([g of polymer (b')/100 ml of final composition]), preferably cellulose acetate butyrate.

Said composition is herein also defined as the "composition of the invention".

On the other hand the term "compositions described herein" refers to both the composition of the invention and the composition described above instead, together with the method of the invention.

According to a preferred embodiment, the liquid component (a') of the composition of the invention is selected from butyl acetate, 1-methyl-2-methoxyethyl acetate and mixtures thereof.

According to a preferred embodiment, the polymer or copolymer (b') of the composition of the invention is cellulose acetate butyrate.

According to a preferred embodiment, in the composition of the invention said one or more polymers (b') are in an amount of 10-50%, still more preferably of 20-40% or 10-30%, advantageously about 25%.

According to a preferred embodiment, in the composition of the invention comprises 1-methyl-2-methoxyethyl acetate and cellulose acetate butyrate, preferably in an amount of 10-50%, still more preferably 10-30% for example about 20%.

The composition of the invention, especially the preferred composition comprising 1-methyl-2-methoxyethyl acetate and cellulose acetate butyrate showed interesting properties with respect to known mounting compositions.

Besides the advantages which will be exposed herein below, cellulose acetate butyrate can be easily dissolved in solvents (a) and (a'), especially in 1-methyl-2-methoxyethyl acetate, which makes the handling and the processing of the solution very fast and industrially convenient.

One of the advantages is that the composition and the slide mounted with cellulose acetate butyrate as the mounting polymer is UV resistant and does not show yellowing over time.

Another important advantage is that there is no need of further components such as stretching agent, to have a smooth and homogeneous layer of mounting agent over the sample.

Yet another important advantage is the low hazard profile with respect of known mounting agents, which represents a very valuable property.

Further, the slide mounted according to the invention, especially according to the preferred embodiments of the invention, show a high resistance and hardness and a low moisture uptake, thus providing a long lasting mounted slide.

Subject-matter of the invention is also the use of the composition of the invention for the preparation of microscope slides of biological, cytological, histological and autopsical samples (herein in the following defined only as biological samples as well). The compositions described herein can be essentially assimilated to a resin and are useful for mounting samples, usually biological, in optical microscopy.

In the present invention, "resin" denotes a liquid viscous material, which can harden under specific conditions, as it will be explained below.

In the preset invention "mounting" denotes, within the process for the preparation of an usually biological sample, e.g. histological or cytological but also of other kinds, the final step on a microscope slide usually carried out in order to perform microscope analysis, as it is well known by the one skilled in the art.

The process for the preparation of the compositions described herein does not require critical conditions or procedures. As a matter of fact, the process can completely occur at room temperature and can be carried out in a container, preferably opaque or amber, equipped with a cap or another kind of closure in order to avoid the evaporation of the liquid component. To this container the liquid component is added and then, under mechanical or magnetic stirring, the other elements composing the compositions described herein or one of the preferred embodiments thereof are added. Finally, it is left under stirring until obtaining a clear homogeneous mixture. Practical examples of the process for the preparation of some illustrative embodiments are provided in the experimental section.

The compositions described herein, as it will be extensively explained in the following, can effectively protect the biological sample and do not generate distortions under the microscope, since they are ultra-transparent and in addition reproduce all the functional characteristics of a coverslip. Moreover, compositions described herein are characterized by high adhesion to the microscope slide, resistance to mechanical stresses and high stability over time. In addition, by their nature, the compositions described herein do not interfere with the material, without producing alterations or artifacts in the structure or staining of the sample.

The peculiar combination of the polymers composing the compositions described herein confers flexibility and rigidity at the same time to the material. It is clear that a certain level of flexibility is needed to create a flattened and homogeneous layer on the whole area of the microscope slide, which uniformly covers the microscope slide for about 3-6 microns, without the risk of breaks at the edges of the section after the composition is completely dried. At the same time, it is necessary that the compositions described herein are provided with such rigidity in order to create a protective barrier, e.g. they are resistant to mechanical stresses, thus effectively protecting the sample.

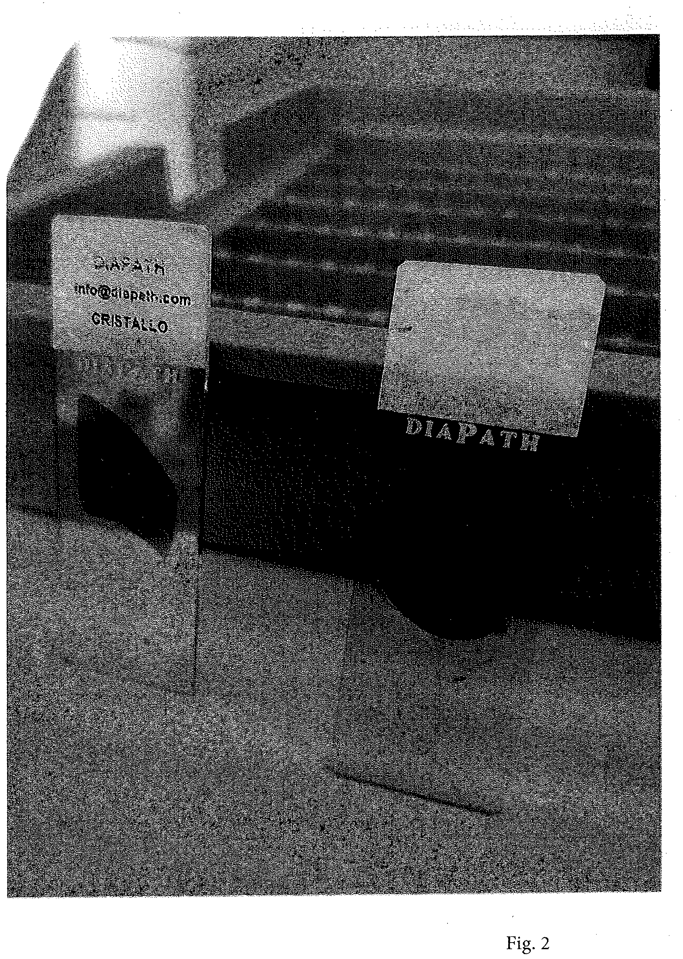

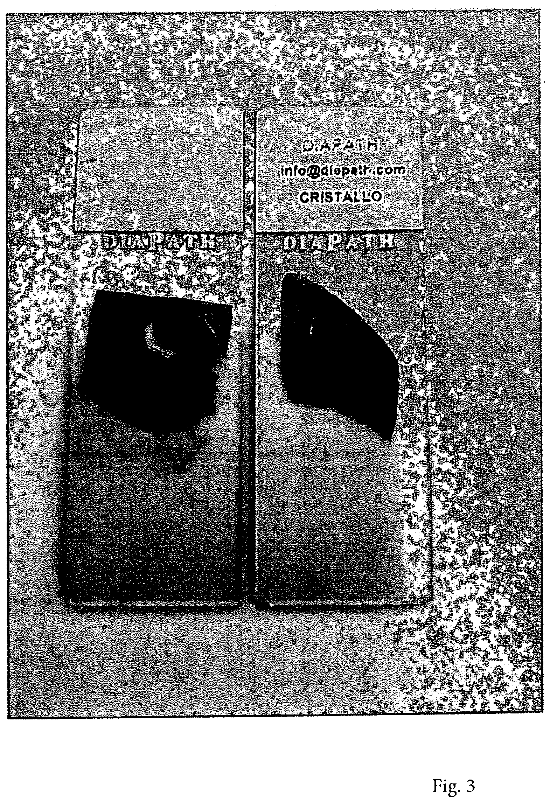

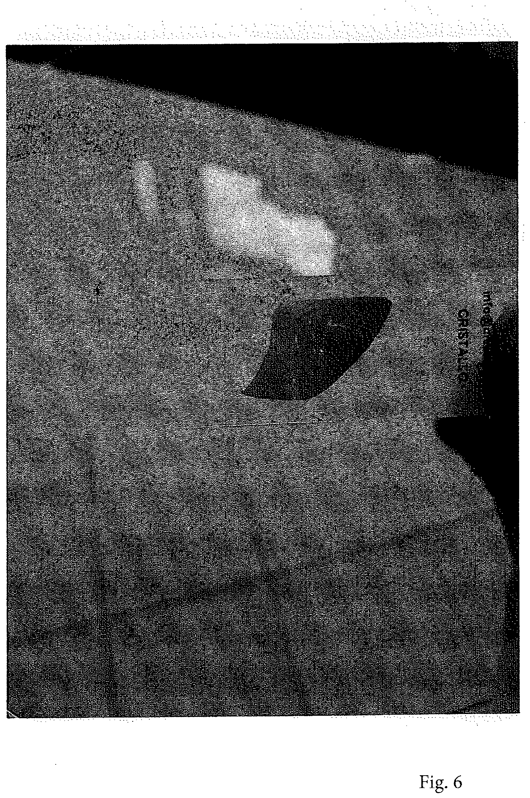

Moreover, the compositions described herein have refractive index very close to that of the microscope slide (1.48-1.50), thereby appearing ultra-transparent to the naked eye (as represented in Figures 2, 3 and 6).

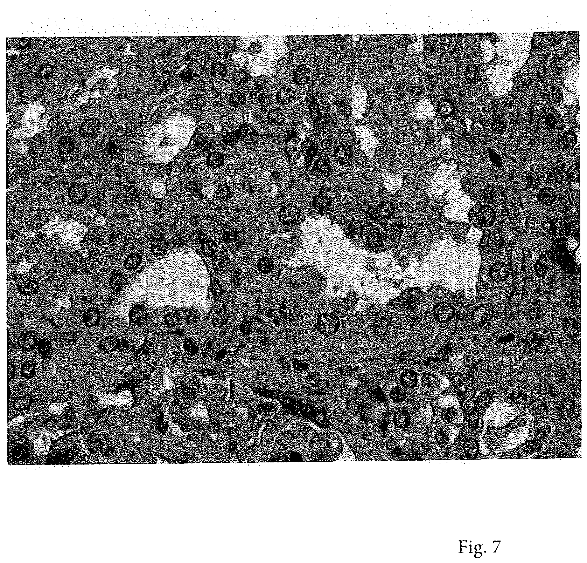

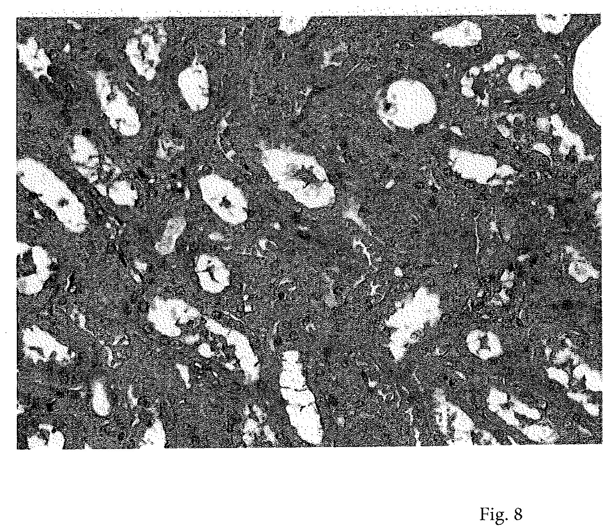

The compositions described herein, preferably the compositions according to the invention, are particularly suitable for the mounting of microscope slides for the microscope observation, since they do not create aberrations, distortions and color alterations of the biological sample; in fact, it is possible to note from Figures 7 and 8, depicting the microscope image of a biological sample mounted with the compositions described herein, that the sample appears ultra-transparent, perfectly suitable for the observation, and has not any distortions or aberrations.

It is possible to precisely modulate the viscosity of the compositions described herein in order to avoid the incorporation of air bubbles and, at the same time, to promote both the adhesion of a layer of suitable thickness on the microscope slide and the auto-flattening of the composition following its application. The modulation of the viscosity can be obtained by modifying the proportions between polymers and liquid component; as it is clear to one skilled in the art, by increasing the amount of the liquid component within the compositions described herein the viscosity will decrease, and vice versa.

Moreover, the complete immiscibility of the compositions described herein with water makes them a material that cannot be altered by the air moisture. On the other hand, it results to be soluble in 1-methyl-2-methoxyethyl acetate, ethyl acetate, butyl acetate and mixtures thereof.

In those cases where it is necessary to dismount the mounted microscope slide, e.g. for further analysis of the histo-cytological material, the compositions described herein can be removed from the microscope slide by simple dipping into one of the above mentioned solvents. The operation of composition re-solubilization and sample dismounting requires little time, i.e. few minutes (5-7- minutes), significantly shorter than the same procedure providing the use of conventionally mounted microscope slides, i.e. by means of mounting medium and coverslip, which requires several days. It is clear therefore that the application of the compositions described herein on the surface of the microscope slide leads to several advantages with respect to the conventional mounting process. In fact, as mentioned, such application creates a uniform, flattened, ultra-transparent, air bubbles-free film and does not require the application of the coverslip, as in the known and conventional art, and allows a quick dismount and has suitable rigidity and flexibility features.

The fact that the application of a coverslip is not required is an important result provided by the present invention.

A further advantage of the method of the invention and compositions described herein is represented by the conditions which allow the curing of the compositions described herein (which are analogous to a resin) following the application of the compositions themselves on one or more microscope slides. These conditions in fact do not require UV irradiation, but the simple exposure to air or a temperature of about 50°C, in the last case saving time with respect to the air-exposure alone.

The curing conditions of the compositions described herein thus lead to a significant advantage in relation to the stability limits of the biological samples, which cannot tolerate in an acceptable way prolonged thermal stresses or continuous UV radiation. Due to these stresses, there is the real possibility that various features of the sample are altered, e.g. due to the interference with the DNA, biological structures on the whole and stains, thus creating alterations or artifacts in the sample structure.

On the other hand, the polymerization process by UV requires a well-defined orientation of the microscope slide relative to the UV source and a sub-optimal orientation would prolong irradiation times thus damaging the biological sample. On the other hand if the usual automatic stainers are used, where the microscope slides are placed into the basket, in order to achieve an optimal orientation of the microscope slides relative to the UV source, the user would be forced to intervene in order to move them out from the basked and place them onto a suitable surface, an operation requiring time and canceling out the advantages of the automatic processing. Differently, the present invention allows the user to directly mount the microscope slides into the basket used for the staining, with a single simple procedure and without the need of removing/readjusting the microscope slides.

Another advantage provided by the compositions described herein is that the time required to cure said compositions is short but in any case leaves to the user, or to the automatic instrument, enough time to conveniently manipulate the microscope slide to be mounted.

In fact, the curing time of the compositions described herein is the ideal time to allow the user, or the automatic instrument, to suitably handle the microscope slide to be mounted, thus allowing at the same time a quick and fast mounting operation and reducing significantly the preparation times of the biological samples and thereby optimizing the workflow.

The compositions described herein can be suitably applied on the microscope slide to be mounted thanks to a simple and quick dipping of one or more microscope slides, usually in vertical position, into said compositions. According to the desired thickness of the resin, it is possible to perform several dippings. It is therefore clear that the viscosity of the composition as well affects the thickness of the resin which is applied on the microscope slide during the dippings.

By way of example, it is possible to perform a double dipping which provides the introduction of the microscope slide into two stations containing the composition of the invention at 20%. According to an embodiment, a dipping of about 1.5 minutes into the first resin at 20%, a dripping of about 1 minute, a second dipping into 20% resin of about 1.5 minutes and finally a dripping for about 1 minute and air- or oven-drying can all be provided.

Alternatively, it is possible to perform a double dipping of the microscope slide in two stations containing two resins at different concentrations; e.g. a first dipping into 30% resin for about 1.5 minutes, a dripping of about 1 minute, and a second dipping into the 20% resin for 10 seconds, followed by a dripping for about 1 minute.

Other possible solutions, in terms of dipping and/or dripping and/or qualitative-quantitative compositions of the compositions, are clearly within the skills of the expert in the field.

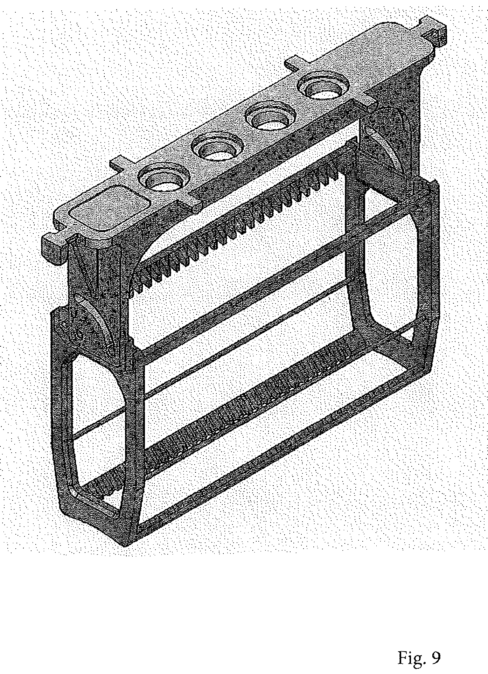

For the dipping of the compositions described herein, the microscope slides can be advantageously housed in a basket as the one described in Figure 9.

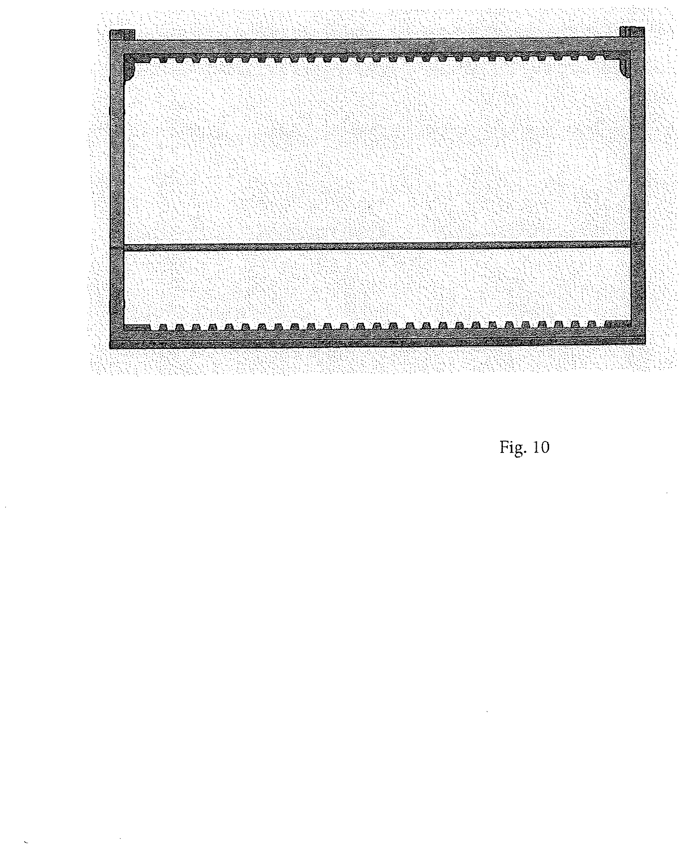

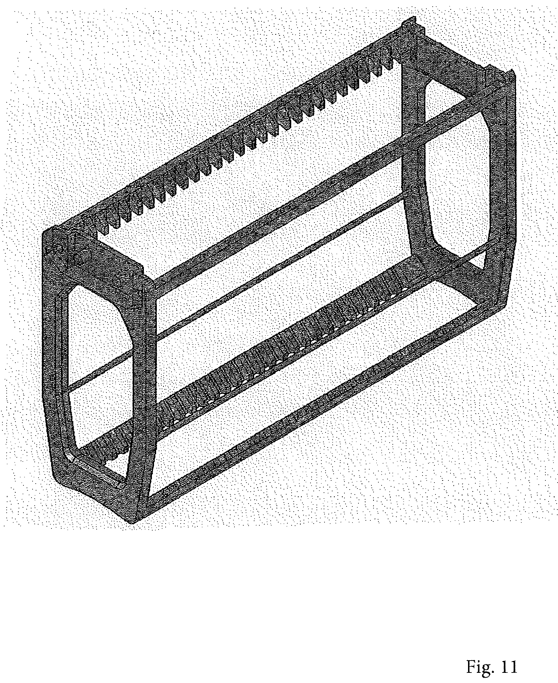

Figures 9-11 particularly show a basket suitable for the placement of the microscope slides that have to be dipped into the compositions described herein, to implement the method of the invention.

With reference to Figures 9, said basket is made of a body characterized by slits where it is possible to insert the microscope slides. To this body a handle is attached, which allows the picking up and transporting procedures by means of the mobile arm of the automatic stainer.

It is clear that the method according to the invention leads to all the above described advantages and still many others.

Among these additional advantages, there is a further and significant time-saving. In fact, as it will be shown in the Experimental Section of the present description, the dipping step into the compositions described herein may involve more microscope slides at the same time, i.e. it can be carried out in parallel on a variable number of microscope slides, e.g. up to 30 if a standard basket is used as a support. This leads to a clear time-saving with respect to the conventional mounting process, which provides the mounting medium and the coverslip to be arranged one sample at a time, i.e. serially.

The compositions described herein within the basket containing the microscope slides to be mounted/already mounted can be easily removed with a quick washing of the basket with a suitable solvent, e.g. 1-methyl-2-methoxyethyl acetate or surrogates thereof, or with ethyl/butyl acetate.

Moreover, the compositions herein described of the invention allow the user to directly mount the microscope slides into the basket which is usually used for the staining, with a single and simple action (the dipping of the basket) and without the need of removing and repositioning the microscope slides, with a further time-saving. By way of example, in the experimental section a manual process for the mounting of the sample, which comprises the use of the compositions described herein and a basket usually used for the staining, will be described.

In addition to common procedures for the manual mounting, the compositions described herein can be easily used in conventional automatic stainers as well, which are normally used in the preparation of biological samples and known for sure to the one skilled in the art. This is very advantageous, since the automatic stainer has not all the critical issues discussed above, which are possessed by the automatic coverslipper, such as for example precise and fine calibration of the instrument, and moreover this will allow a precise mounting process to be provided without the use of any user.

By way of illustration, an automatic stainer is an instrument comprising various tanks containing fluids, generally staining solutions, and a mechanical arm. The mechanical arm can autonomously lift up, position and dip the basket containing the microscope slides to be stained into the various tanks. It is possible to program the mechanical arm in order to define the dipping sequence in the various tanks, as well as the dipping time in each tank.

This application of the compositions described herein offers the umpteenth time-saving with respect to the conventional mounting processes and, by way of example, in the experimental section a mounting process comprising an automatic stainer and the compositions described herein will be described.

Moreover and contrary to known compositions and resins for mounting microscope slides, the compositions described herein, in particular the composition of the invention, are particularly suited for the realization of the method of the invention, having the features required to that aim. In fact, with the known compositions and resins, it could not be possible to carry out the mounting of the microscope slides by means of the dipping technique of the microscope slide into the composition, due to the viscosity of said known compositions and resins which are not suited to such technique.

It will be clear that the time-saving of the mounting process, due to the compositions described herein, is significant. In fact the conventional mounting process, either manual or automatic, requires a time proportional to the number of the microscope slides. A comparative example of the conventional mounting process will be provided in the experimental section.

The compositions described herein allow therefore to get rid of a series of precision steps aimed at preparing one sample at a time, by replacing it with a single procedure which can be carried out for several microscope slides at a time, without inaccuracy and highly reproducible.

The use according to the invention provides all the advantages described above for the preparation of samples for the microscope analysis, specifically for the mounting step of the sample preparation, among which for example a significant time-saving and more precise and reproducible processing of biological samples.

Finally, subject-matter of the invention are the biological, cytological, histological and autopsical samples mounted with the compositions described herein, advantageously with the composition of the invention and with the method of the invention that makes use of such composition and said samples, which are characterized in that they do not comprise a coverslip.

### BRIEF DESCRIPTION OF THE DRAWINGS

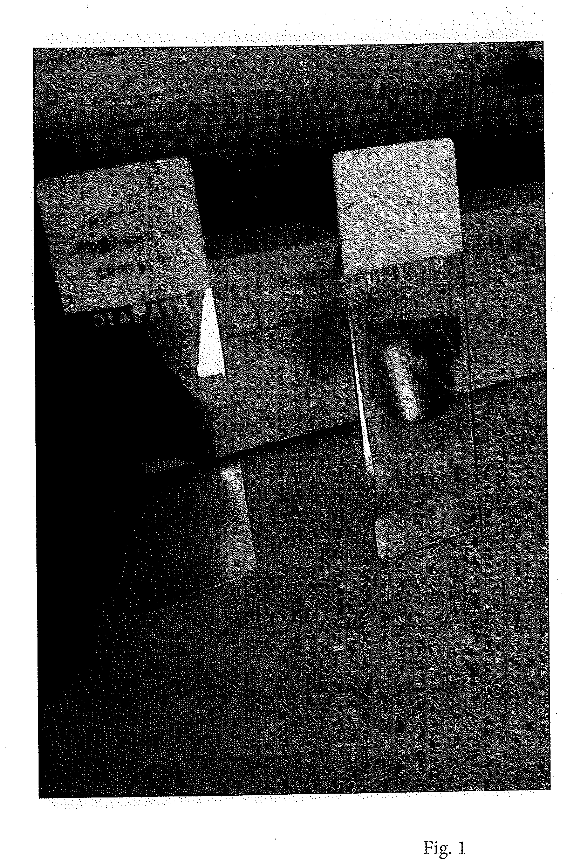

Figure 1 shows a homogeneous and smooth coating of the slide: the mirrored effect denotes the perfect covering of the histological section.
Figures 2 and 3 depict the compositions described herein after drying, at the end of the mounting process.

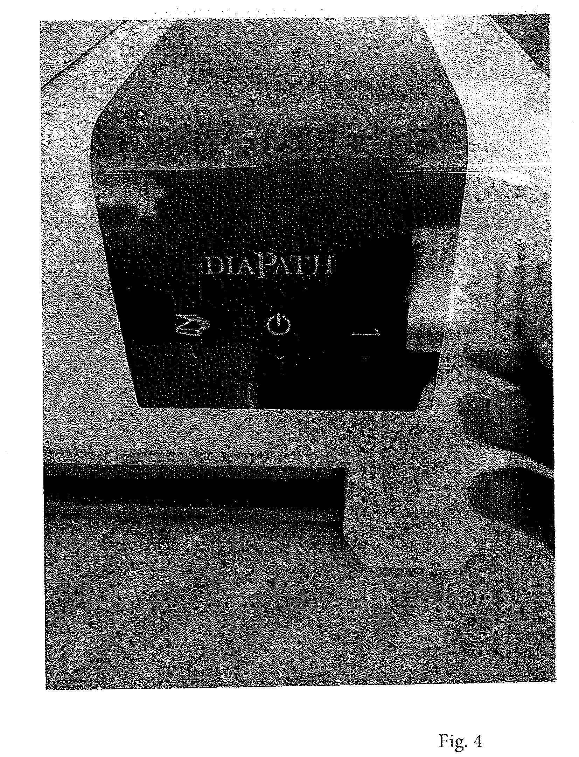

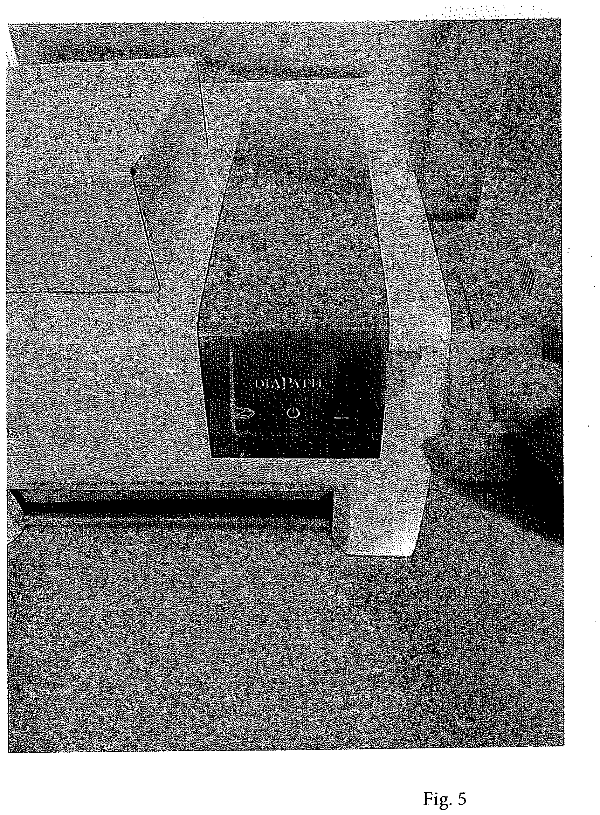

Figures 4-6 show the ultra-transparency of the compositions described herein.
Figures 7 and 8 shows a microscope image representing a biological sample mounted with the compositions described herein.

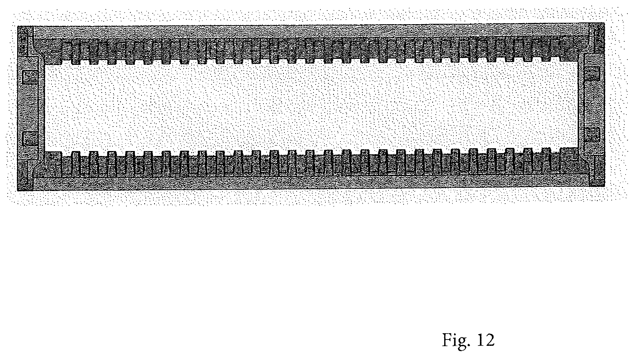

Figures 9-12 show the basket useful in the method of the invention.

### EXPERIMENTAL SECTION

### Example 1

### Process for the preparation of an embodiment of a composition for the method according to the invention

A suitable container, preferably opaque or amber, is filled with 750 ml of 1-methyl-2-methoxyethyl acetate. The container has preferably a cap in order to not lose solvent by evaporation.

250 grams of cellulose acetate butyrate (CAB) are added to the solvent and the mixture is left under stirring for about 30 minutes, until a homogeneous clear mixture is obtained. The process is performed entirely at room temperature, the mechanical stirring is stopped only when a homogeneous clear mixture, free of particulate matter, is obtained.

### Example 2

### Mounting processes

### Example 2.1 (Comparative)

### Conventional manual mounting process

At the end of the common process of manual staining, ending with alcohol washing, each of the 30 microscope slides underwent the following steps: (I) placing the microscope slide horizontally on the worktop; (II) delivering the proper amount of mounting medium on the microscope slide (about 2 drops); (III) placing the coverslip; and (IV) adjusting the coverslip. Overall time required to mount each microscope slide: about 12 seconds; multiplied for each microscope slide: about 360 seconds (i.e., about 6 minutes).

To the overall time spent for the conventional mounting of all the microscope slides, it should be added the drying time of the mounting medium, which takes about 20 minutes to be dried acceptably, for a total mounting time of about 26 minutes and 30 seconds.

Contrary to what has been described above, with the process according to the invention and considering two dippings, it is possible to save time, as it will be clear from the following examples.

Moreover, as it is clear from the just described example, the four steps reported above required for the conventional mounting, in addition to take a significant amount of time, are absolutely not free from errors or inaccuracy, these being particularly significant features. For this reason, the overall time of the procedure described above is further increased when: (1) the mounting medium is added in excess on the microscope slide and it would be required to remove such an excess; and (2) the mounting medium leaks from the microscope slide and it would be required to wait for the full and complete drying of the same for practical management of the workflow. Finally, it is required to wait at least one day after the mounting process for the effective storage of the so-mounted microscope slides, since it is required to wait until they are complete dried.

### Example 2.2

### Manual mounting process by using the method of the invention

Following the common method of manual staining, ending with the xylene washing (or similar solvents), a basket containing 25 microscope slides is manually dipped into a tank containing the composition according to example 7 for about 1.5 minutes, after which the excess of the composition is removed by dripping for 1 minute and a second dipping into the same composition is carried out for about 1.5 minutes, followed by dripping for about 1 minute. Finally the mounted microscope slides are dried at 50°C for 15 minutes, for an overall working-time of 20 minutes.

Alternatively, the 25 mounted microscope slides can be placed in an oven at 65°C for about 5 minutes, thus providing a mounting process having an overall time of about 10 minutes.

Microscope slides mounted in this way are shown in Figures 7 and 8.

### Example 2.3

### Automatic mounting process by using the method of the invention

Following the common staining process by means of an automatic stainer, ending with a xylene washing, 25 microscope slides (just stained) are taken by the automatic arm and dipped for 1.5 minutes into a tank still of the automatic stainer, containing the composition of the example 1. Then, the automatic arm of the automatic stainer transfers the microscope slides into an empty tank, in order to remove the excess of the composition for 1 minute and then they are dipped into a tank containing the composition of the example 1 for 10 seconds and then transferred into an empty tank, in order to remove the excess of the composition for 1 minute and to be completely air-dried, otherwise they are placed in an oven for a shorter drying.

The so-simplified mounting process of the microscope slides starts immediately after the staining and is completed within few minutes, without involving in any way the user.

It is clear that the mounting processes contemplating the use of the compositions described herein, i.e. Examples 2.2 and 2.3, provide an important time-saving with respect to the time needed for the conventional mounting, as described in Example 2.1, thus reducing the overall time for the preparation of the biological samples and optimizing the workflow and also getting rid of the problems related to air bubbles, flattening and possible inaccuracy due to the work by the user.

## Claims

1. A method for mounting microscope slides for the analysis of biological, cytological, histological and autopsical samples, comprising:
(i) dipping said microscope slides into at least one fluid composition consisting of:
a) at least one liquid component selected from ethyl acetate, butyl acetate, 1-methyl-2-methoxyethyl acetate; and
b) one or more polymers or copolymers selected from cellulose di-acetate, cellulose tri-acetate, cellulose propionate and cellulose acetate butyrate, in an amount of 5%-80%.

2. The method according to claim 1, for mounting microscope slides for the analysis of biological, cytological, histological and autopsical samples, further comprising:
(ii) extracting said microscope slides from said composition;
(iii) letting them drip;
(iv) optionally repeating the steps from (i) to (iii); and
(v) letting them air-dry or drying them with a suitable means.

3. The method according to claim 1 or 2, **characterized in that** said one or more polymers (b) are present in an amount of 10-30%.

4. The method according to any one of claims 1 to 3, **characterized in that** said at least one of said one or more polymers (b) is a cellulose acetate butyrate.

5. The method according to any one of claims 1 to 4, **characterized in that** said at least one liquid component (a) is 1-methyl-2-methoxyethyl acetate.

6. A composition for mounting a microscope slide for the analysis of biological, cytological, histological and autopsical samples, consisting of:
a') a liquid component selected from ethyl acetate, butyl acetate, 1-methyl-2-methoxyethyl acetate and mixtures thereof; and
b') one or more polymers or copolymers selected from cellulose di-acetate, cellulose tri-acetate, cellulose propionate and cellulose acetate butyrate, in an amount of 5%-80%.

7. The composition according to claim 6, **characterized in that** said one or more polymers (b') are present in an amount of 10-30%.

8. The composition according to claim 7, **characterized in that** said one or more polymers (b') are present in an amount of about 25%.

9. The composition according to any one of claims 6 to 8, **characterized in that** said at least one of said one or more polymers (b') is cellulose acetate butyrate.

10. Use of a composition according to any one of claims 6 to 9, for mounting a microscope slide for the analysis of biological, cytological, histological and autopsical samples by dipping said microscope slide into said composition.

11. The method according to any one of claims 1 to 5, **characterized in that** at least two steps (i) are carried out.

12. The method according to claim 11, **characterized in that** the compositions used in steps (i) have the same concentration.

13. The method according to claim 12, **characterized in that** two steps (i) are carried out and **in that** said compositions have a concentration of about 25%.

14. Biological, cytological, histological or autopsical samples mounted with the composition according to any one of claims 6 to 10 **characterized in that** they do not comprise a coverslip.

15. Biological, cytological, histological or autopsical samples mounted with the method according to any one of claims 11 to 13 **characterized in that** they do not comprise a coverslip.

## Patentansprüche

1. Verfahren zum Montieren von Objektträgern für die Analyse biologischer, zytologischer, histologischer und autopischer Proben, umfassend
(i) Eintauchen der Objektträger in mindestens eine flüssige Zusammensetzung, bestehend aus:
a) mindestens einer flüssige Komponente, ausgewählt aus Ethylacetat, Butylacetat, 1-Methyl-2-methoxyethylacetat; und
b) einem oder mehreren Polymeren oder Copolymeren, ausgewählt aus Cellulosediacetat, Cellulosetriacetat, Cellulosepropionat und Celluloseacetatbutyrat, in einer Menge von 5 bis 80 %.

2. Verfahren nach Anspruch 1 zum Montieren von Objektträgern für die Analyse biologischer, zytologischer, histologischer und autoptischer Proben, weiterhin umfassend:
(ii) Extrahieren der Objektträger aus der Zusammensetzung;
(iii) sie tropfen lassen;
(iv) optionales Wiederholen der Schritte von (i) bis (iii); und
(v) sie lufttrocknen lassen oder sie mit geeigneten Mitteln trocknen.

3. Verfahren nach Anspruch 1 oder 2, **dadurch gekennzeichnet, dass** das eine oder die mehreren Polymere (b) in einer Menge von 10 bis 30 % vorhanden sind.

4. Verfahren nach einem der Ansprüche 1 bis 3, **dadurch gekennzeichnet, dass** das mindestens eine des einen oder der mehreren Polymere (b) ein Celluloseacetatbutyrat ist.

5. Verfahren nach einem der Ansprüche 1 bis 4, **dadurch gekennzeichnet, dass** die mindestens eine flüssige Komponente (a) 1-Methyl-2-methoxyethylacetat ist.

6. Zusammensetzung zum Montieren eines Objektträgers für die Analyse biologischer, zytologischer, histologischer und autoptischer Proben, bestehend aus:
a') einer flüssigen Komponente, ausgewählt aus Ethylacetat, Butylacetat, 1-Methyl-2-methoxyethylacetat und Mischungen davon; und
b') einem oder mehreren Polymeren oder Copolymeren, ausgewählt aus Cellulosediacetat, Cellulosetriacetat, Cellulosepropionat und Celluloseacetatbutyrat, in einer Menge von 5 bis 80 %.

7. Zusammensetzung nach Anspruch 6, **dadurch gekennzeichnet, dass** das eine oder die mehreren Polymere (b') in einer Menge von 10 bis 30 % vorliegen.

8. Zusammensetzung nach Anspruch 7, **dadurch gekennzeichnet, dass** das eine oder die mehreren Polymere (b') in einer Menge von etwa 25 % vorliegen.

9. Zusammensetzung nach einem der Ansprüche 6 bis 8, **dadurch gekennzeichnet, dass** das mindestens eine des einen oder der mehreren Polymere (b') Celluloseacetatbutyrat ist.

10. Verwendung einer Zusammensetzung nach einem der Ansprüche 6 bis 9 zum Montieren eines Objektträgers für die Analyse biologischer, zytologischer, histologischer und autoptischer Proben durch Eintauchen des Objektträgers in die Zusammensetzung.

11. Verfahren nach einem der Ansprüche 1 bis 5, **dadurch gekennzeichnet, dass** mindestens zwei Schritte (i) durchgeführt werden.

12. Verfahren nach Anspruch 11, **dadurch gekennzeichnet, dass** die in Schritt (i) verwendeten Zusammensetzungen die gleiche Konzentration aufweisen.

13. Verfahren nach Anspruch 12, **dadurch gekennzeichnet, dass** zwei Schritte (i) durchgeführt werden und dass die Zusammensetzungen eine Konzentration von etwa 25 % aufweisen.

14. Biologische, zytologische, histologische oder autoptische Proben, montiert mit der Zusammensetzung nach einem der Ansprüche 6 bis 10, **dadurch gekennzeichnet, dass** sie kein Deckglas umfassen.

15. Biologische, zytologische, histologische oder autoptische Proben, montiert mit dem Verfahren nach einem der Ansprüche 11 bis 13, **dadurch gekennzeichnet, dass** sie kein Deckglas umfassen.

## Revendications

1. Procédé de montage de lames de microscope pour l'analyse d'échantillons biologiques, cytologiques, histologiques et autopsiques, comprenant l'étape consistant à :
(i) tremper lesdites lames de microscope dans au moins une composition fluide consistant en :
a) au moins un composant liquide choisi parmi l'acétate d'éthyle, l'acétate de butyle, l'acétate de 1-méthyl-2-méthoxyéthyle ; et
b) un ou plusieurs polymères ou copolymères choisis parmi le di-acétate de cellulose, le tri-acétate de cellulose, le propionate de cellulose et le butyrate d'acétate de cellulose, en une quantité de 5 % à 80 %.

2. Procédé selon la revendication 1, pour le montage de lames de microscope pour l'analyse d'échantillons biologiques, cytologiques, histologiques et autopsiques, comprenant en outre les étapes consistant à :
(ii) extraire lesdites lames de microscope de ladite composition ;
(iii) les laisser s'égoutter ;
(iv) répéter éventuellement les étapes de i) à iii) ; et
(v) les laisser sécher à l'air ou les sécher à l'aide d'un moyen approprié.

3. Procédé selon la revendication 1 ou 2, **caractérisé en ce que** ledit ou lesdits polymères (b) sont présents en une quantité de 10 à 30 %.

4. Procédé selon l'une quelconque des revendications 1 à 3, **caractérisé en ce que** ledit au moins un dudit ou desdits polymères (b) est un butyrate d'acétate de cellulose.

5. Procédé selon l'une quelconque des revendications 1 à 4, **caractérisé en ce que** ledit au moins un composant liquide (a) est l'acétate de 1-méthyl-2-méthoxyéthyle.

6. Composition pour le montage d'une lame de microscope pour l'analyse d'échantillons biologiques, cytologiques, histologiques et autopsiques, constituée de :
a') un composant liquide choisi parmi l'acétate d'éthyle, l'acétate de butyle, l'acétate de 1-méthyl-2-méthoxyéthyle et leurs mélanges ; et
b') un ou plusieurs polymères ou copolymères choisis parmi le di-acétate de cellulose, le tri-acétate de cellulose, le propionate de cellulose et le butyrate d'acétate de cellulose, en une quantité de 5 % à 80 %.

7. Composition selon la revendication 6, **caractérisée en ce que** ledit ou lesdits polymères (b) sont présents en une quantité de 10 % à 30 %.

8. Composition selon la revendication 7, **caractérisée en ce que** ledit ou lesdits polymères (b') sont présents en une quantité d'environ 25%.

9. Composition selon l'une quelconque des revendications 6 à 8, **caractérisée en ce que** ledit au moins un dudit ou desdits polymères (b') est le butyrate d'acétate de cellulose.

10. Utilisation d'une composition selon l'une quelconque des revendications 6 à 9, pour le montage d'une lame de microscope pour l'analyse d'échantillons biologiques, cytologiques, histologiques et autopsiques par trempage de ladite lame de microscope dans ladite composition.

11. Procédé selon l'une quelconque des revendications 1 à 5, **caractérisé en ce qu'**au moins deux étapes (i) sont mises en oeuvre.

12. Procédé selon la revendication 11, **caractérisé en ce que** les compositions utilisées dans les étapes (i) ont la même concentration.

13. Procédé selon la revendication 12, **caractérisé en ce que** deux étapes (i) sont réalisées et **en ce que** lesdites compositions ont une concentration d'environ 25%.

14. Échantillons biologiques, cytologiques, histologiques ou autopsiques montés avec la composition selon l'une quelconque des revendications 6 à 10, **caractérisés en ce qu'**ils ne comportent pas de lamelle couvre-objet.

15. Échantillons biologiques, cytologiques, histologiques ou autopsiques montés avec le procédé selon l'une quelconque des revendications 11 à 13 **caractérisés en ce qu'**ils ne comportent pas de lamelle couvre-objet.
